(19) **Europäisches Patentamt**

**European Patent Office**

**Office européen des brevets**

(11) **EP 1 139 317 B1**

(12) **EUROPÄISCHE PATENTSCHRIFT**

(45) Veröffentlichungstag und Bekanntmachung des Hinweises auf die Patenterteilung:
**14.05.2003 Patentblatt 2003/20**

(51) Int Cl.$^7$: **G08G 1/0968**

(21) Anmeldenummer: **01101417.2**

(22) Anmeldetag: **23.01.2001**

(54) **Verfahren zur Off-Board-Navigation eines Fahrzeugs**

Method for off board navigation of a vehicle

Procédé de navigation hors-bord d'un véhicule

(84) Benannte Vertragsstaaten:
**AT BE CH CY DE DK ES FI FR GB GR IE IT LI LU MC NL PT SE TR**

(30) Priorität: **27.03.2000 DE 10014806**

(43) Veröffentlichungstag der Anmeldung:
**04.10.2001 Patentblatt 2001/40**

(73) Patentinhaber: **TEGARON Telematics GmbH
53121 Bonn (DE)**

(72) Erfinder:
• **Breuer, Bernd
53332 Bornheim (DE)**
• **Schlierkamp-Voosen, Dirk, Dr.
53127 Bonn-Venusberg (DE)**
• **Witych, Michael, Dr.
53227 Bonn (DE)**

• **Wohlfahrt, Jürgen
53119 Bonn (DE)**

(74) Vertreter: **Deuschel, Wilhelm
Deutsche Telekom
Rechtsabteilung
Am Kavalleriesand 3
64307 Darmstadt (DE)**

(56) Entgegenhaltungen:
**EP-A- 0 629 840          WO-A-97/18544
DE-A- 19 651 146        DE-A- 19 816 585
US-A- 5 369 588**

• **PATENT ABSTRACTS OF JAPAN vol. 1996, no. 09, 30. September 1996 (1996-09-30) & JP 08 116336 A (CANON INC), 7. Mai 1996 (1996-05-07)**

EP 1 139 317 B1

**Beschreibung**

Die Erfindung betrifft ein Verfahren zur Off-Board-Navigation eines Fahrzeugs gemäß dem Oberbegriff des Anspruchs 1.

Bekannte Off-Board-Navigationssysteme bestehen hauptsächlich aus einer Zentrale und einem im Fahrzeug eingebauten Endgerät.

Dabei umfaßt die Zentrale Mittel zur Routenberechnung, Mittel zum Speichern von Verkehrsinformationen, Adresslokalisierungen und Strassenkarteninformationen sowie Mittel zur Registrierung von Routen und eingehenden Verkehrsinformationen.

Das Endgerät umfaßt einen Rechner, ein Ortungsmodul, Mittel zur Zieleingabe sowie Mittel zur Ausgabe von Sprache, Text und Grafik. Normalerweise umfaßt das Endgerät weder Strassenkarteninformationen zur Routenberechnung noch Mittel zur Dynamisierung der Routenberechnung, d. h. Einbeziehung von Verkehrsinformationen in die Routenberechnung und ständige Aktualisierung der Routenberechnung. Diese Vorgänge werden von der Zentrale durchgeführt und die Ergebnisse an das Endgerät übertragen.

Die Zentrale kommuniziert mit dem Endgerät bidirektional über Datennachrichten. Als Träger der Datennachrichten können unterschiedliche Verfahren und Systeme, beispielsweise GSM, SMS, GPRS oder UMTS, verwendet werden.

Die dem Endgerät bekannte aktuelle Fahrzeugpositionsinformation und Zielpositionsvorgabe wird in Form einer Route-Request-Message (Routenanforderungsnachricht) an die Zentrale gesendet.

Diese Route-Request-Message wird endgeräteseitig automatisch oder durch eine manuelle Eingabe des Benutzers ausgelöst. Die automatische Auslösung kann dabei innerhalb des Endgeräts durch den Ablauf einer vorgegebenen Zeitspanne oder durch einen vorgegebenen Positionsfortschritt des Fahrzeugs (Zurücklegen einer vorgegebenen Strecke) oder durch eine erkannte Fehlfahrt erfolgen.

Auf eine Route-Request-Message wird von der Zentrale mit einer Route-Message (Routennachricht) geantwortet, wobei die Route-Message die Route von der Anfrageposition bis zur Zielposition beinhaltet.

Eine Route besteht aus Wegepunkten, die auf dem Weg zum Ziel passiert werden sollen.

Ein Wegepunkt ist eine geographische Koordinate, die zur Navigation benötigt wird. Zusätzlich zur geographischen Position kann ein Straßenname und ein Aktionshinweis (Icon) zum Wegepunkt gespeichert sein. Ein Aktionshinweis ist dabei die graphische Abbildung der Kreuzung, an der eine Aktion vom Benutzer gefordert wird. Der Aktionshinsweis enthält zusätzlich zur Kreuzungsgeometrie auch die Einfahrts- und Ausfahrtswinkel des Wegepunktes.

Die Route wird in der Zentrale aufgrund von vorgebbaren Attributen, beispielsweise schnellste Route, kürzeste Route, vorgegebene Strassentypen bevorzugen oder über Zwangspunkte (Zwischenziele), berechnet. Hierzu nutzt die Zentrale eine einzige Quelle (z. B. digitale Karte) mit Strasseninformationen.

Von einer dynamisierten Route wird gesprochen, wenn die Route unter Berücksichtigung der aktuellen oder prognostizierten Verkehrsinformationen im Routenverlauf berechnet worden ist. Die aktuellen oder prognostizierten Verkehrsinformationen liegen ebenfalls in,der Zentrale vor.

Aus der DE 196 51 146 A1 ist ein Verfahren zur Off-Board-Navigation eines Fahrzeugs bekannt, bei welchem nach Eingabe einer gewünschten Zielposition ausgehend von der Fahrzeugstartposition von einer Zentrale eine Fahrtroute von der Fahrzeugstartposition zur gewünschten Zielposition berechnet und die Fahrtroute als aufeinanderfolgende Wegepunkte, die auf dem Weg zur Zielposition passiert werden müssen, von der Zentrale an das Fahrzeug übertragen und dem Fahrer des Fahrzeugs die Fahrtroute unter Berücksichtigung der fortlaufend ermittelten momentanen Ortskoordinaten des Fahrzeugs in Form von Fahrhinweisen ausgegeben wird, wobei die Wegepunkte mindestens geographische Ortskoordinaten umfassen.

Nachteilig an den bekannten Off-Board-Navigationsverfahren ist, daß, wenn sehr lange Datensätze von der Zentrale entweder verschlüsselt oder nicht reihenfolgeoptimiert an das Endgerät übertragen werden, das Endgerät erst dann mit der Navigation und mit der Ausgabe von Fahranweisungen beginnen kann, wenn bei vorliegender Verschlüsselung alle Daten oder bei fehlender Reihenfolgeoptimierung die aktuell benötigten Daten im Endgerät empfangen wurden. Insbesondere, wenn die Daten zwischen der Zentrale und dem Endgerät verschlüsselt übertragen werden, sind diese Verfahren von Nachteil, da dann der Gesamtdatensatz erst nach Eintreffen aller zu einem Schlüssel gehörigen Datensätze entschlüsselt werden kann. Dies ist mit einer Komforteinbusse für den Benutzer verbunden. Insbesondere bei Verwendung von SMS zur Datenübertragung und sehr langen Datensätzen kommt es zu langen Verzögerungen, da für die Datenübertragung eines langen Datensatzes viele SMS benötigt werden.

Aufgabe der Erfindung ist es, ein Off-Bord-Navigationsverfahren anzugeben, welches auch bei großen zu übertragenden Datenmengen und verschlüsselter Datenübertragung eine gute Datenversorgung während der Reise sicherstellt und den Gesamtkommunikationsaufwand zwischen Fahrzeug und Zentrale minimiert.

Erfindungsgemäß wird diese Aufgabe durch die Merkmale des Anspruchs 1 gelöst.

Die Unteransprüche kennzeichnen vorteilhafte Aus- und Weiterbildungen der Erfindung.

Ein wesentlicher Gedanke der Erfindung besteht darin, vor der Datenübertragung zu prüfen, ob die Länge des zu übertragenden Datensatzes einen vorgegebenen Wert übersteigt. Ist dies der Fall, so wird anstelle der Gesamtroute (Total-Route) nur eine verkürzte Route (Pre-Route) gesendet, wobei die Pre-Route neben den Wegepunkten der Anfangsroute auch die gesamte Routengrobbeschreibung, welche nur die Abfolge der übergeordneten Straßen und Gesamtsollfahrstreckenlänge sowie eine Annahme der Gesamtfahrzeit und die Zieladresse enthält, umfaßt. Nach Empfang dieser Pre-Route kann das Endgerät mit der Navigation beginnen und muß.nicht warten, bis alle Daten empfangen wurden.

Die Zentrale bestimmt flexibel in Abhängigkeit der Datenmenge der Gesamtroute, der voraussichtlichen Übertragungsdauer oder anderer fester Parameter, beispielsweise abhängig vom verwendeten Übertragungssystem, ob eine Pre-Route gesendet wird und wieviele Daten die Pre-Route enthalten soll.

Bei einer vorteilhaften Ausführung überträgt die Zentrale räumliche und/oder zeitliche Abstandsgrößen zwischen zwei aufeinanderfolgenden Wegepunkten und Annahmen über die Fahrtzeiten zwischen den aufeinanderfolgenden Wegepunkten.

Zur Erkennung von Fehlfahrten werden von der Zentrale in vorteilhafter Weise zusätzliche Wegepunkte, sogenannte Randwegepunkte, im direkten Randbereich des Sollweges zum Ziel übertragen, die vom Fahrzeug auf seinem Weg zur Zielposition nicht passiert werden dürfen. Wird ein Randwegepunkt trotzdem passiert, oder nähert sich das Fahrzeug bis auf eine vorbestimmte Entfernung dem Randwegepunkt, dann wird eine Fehlfahrt erkannt.

Zwischen zwei Wegepunkten wird eine Fehlfahrt erkannt, wenn

$$(S - B) > A + K$$

wobei S die Länge der Wegstreckenraumkurve (Mittelstreifenkurve) zwischen zwei Wegepunkten ist und von der Zentrale als Sollwert an das Endgerät übertragen wird, wobei die Zentrale diesen Sollwert beispielsweise aus der dort vorhandenen digitalen Karte ermittelt, B ist die bisher zurückgelegte Strecke, die mit einem Ortungsmodul und durch Ortungsverbesserung ermittelt wird, wobei die diskreten Strecken zwischen zwei Positionssendezeitpunkten aufaddiert werden, A ist der kürzeste Abstand zwischen der aktuellen Position und dem nächstem Wegepunkt. Die Variable K enthält alle Korrekturen bezüglich Streuung der Einzelpositionen, sowie Genauigkeit der letzten Wegepunktdetektion, von S und B und den Koordinaten des Zielwegepunktes am Ende von S.

Zudem wird eine Fehlfahrt erkannt, wenn die Einfahrtrichtung und/oder die Ausfahrtrichtung eines Wegepunktes innerhalb eines bestimmten Radius nicht detektiert werden kann, oder wenn ein vorbestimmter Korridor um die Sollroute verlassen wird, oder wenn an markanten Stellen Teilspuren erkannt werden, die eindeutig auf eine Fehlfahrt schließen lassen.

Die übertragenen Routen (Gesamtroute und Pre-Route) werden in der Zentrale endgerätespezifisch registriert. Sofern der Routenvergleich in der Zentrale zwischen einer neu berechneten und einer vorherigen Route ergibt, daß die neue Route sich kurz- oder mittelfristig oder bis zum Ziel von der im Endgerät aktuell genutzten Route nicht signifikant unterscheidet, kann die Zentrale die Zustellung der neu berechneten Route zum Endgerät entweder ganz oder zeitweilig aussetzen oder nur die geänderte Teilroute bei Bedarf an das Endgerät senden.

Der Bedarf zur Sendung einer signifikanten Änderung einer von der Zentrale bereits berechneten Route oder Teilroute wird durch den Positionsfortschritt, also die Annäherung des Fahrzeugs an die geänderte Teilroute bestimmt. Entweder trifft die Zentrale eine plausible Annahme über den Fortschritt des Fahrzeugs aufgrund von Fahrzeug- und Verkehrsdaten und sendet rechtzeitig die aufdatierte Teilroute an das Endgerät, oder das Endgerät im Fahrzeug fordert die in der Zentrale bereits vorliegende Routenänderung durch eine spezielle Routen-Request-Message an, wenn das Fahrzeug eine vorgegebene Strecke durchfahren hat oder sich einer relevanten Position angenähert hat. Spezielle Bedarfsänderungen wie beispielsweise eine weitere Routen-Request-Message mit Zieladressänderungen veranlassen das Löschen der in der Zentrale bereits berechneten Route und somit deren zukünftige Zustellung. Sofern im Endgerät ein Timer zusätzlich noch eine unabhängige automatische Route-Request-Message neu initiiert hat, wird in der Zentrale aufgrund von Zeit- und Distanzkriterien sowie Änderungen in der Verkehrsinformation entschieden, ob eine neu zu berechnende Route über die bereits'vorliegende Route gesendet wird.

Die Zentrale entscheidet über die Sendung der vorliegenden Teilrouten, wobei der Gesamtkommunikationsaufwand minimiert wird durch Abwägung des Mehraufwands der Positionsdatenübermittlung gegen die sofortige Übermittlung der Teilroute bei Gewichtung der Datenmenge und der zeitlichen Konstanz der Teilroute.

Die Zentrale kann durch einen Abgleich der Verkehrsänderungen (Registratur von Verkehrsänderungen) ebenfalls feststellen, welche der bereits erstellten Routen, die auf ihre Zustellung zum Endgerät warten, nun aufgrund der relevanten Änderung der Verkehrssituation neu berechnet werden sollen und gegebenenfalls direkt zugestellt werden sollen. Dieser Mechanismus kann auch genutzt werden für Situationen, in denen keine neu berechneten Teilrouten vorhanden sind, sondern die Zentrale detektiert, dass die aktuell im Endgerät genutzte Route die aktuelle Verkehrssituation nicht berücksichtigt.

Die Nutzung von Teilrouten als Routen innerhalb der Route-Message bedingt im Endgerät einen Algorithmus zur Verknüpfung (Routen-Merge) von logisch zueinander gehörenden Routen in Form von Gesamt- und/oder Teilrouten. Der Routen-Merge ist immer dann möglich, wenn gemeinsame Wegepunkte in zwei Routen existieren. Wird ein Teilstück der aktuell genutzten Route durch eine neue Route ausgetauscht, so ist auch die Routengrobbeschreibung entsprechend der aktuelleren Route aufzudatieren. Ein Routen-Merge kann auch ein Austausch mit einer räumlich identischen Teilroute mit geänderten geschätzten Restfahrzeiten beinhalten. Die in der Regel benutzte Verknüpfungsrichtung ist die Richtung von der aktuellen Position zur Zielposition beim Eintreffen der neuen Route im Endgerät, also der Bereich der noch zu fahrenden Restroute. Der bereits abgefahrene Anfang der Route kann wahlweise ebenfalls derart verknüpft werden, daß sich die Route bezüglich der Wegepunkte verändert. Normalerweise wird dieser Routenbereich nicht verändert, da eine Routenänderung bezüglich der Wegepunkte auch die Angabe zur Gesamtreisezeit rückseitig verändern würde, sofern eine Routenkonsistenz zwischen Routen-Wegepunkten und Zeiten erhalten bleiben soll. Das Hauptkriterium des Routen-Merges neben der Einbindung von aktuelleren Teil-Routen ist, daß das Fahrzeug nach der Verknüpfung, also bei Nutzung der verknüpften Route im Endgerät, auf der Route belassen werden kann, also nicht in den Fehlfahrtmodus umschalten muß. Ein zusätzlicher Nutzen des Routen-Merges liegt vor, wenn mit Pre-Routen von Gesamtrouten gearbeitet wird und die zur Pre-Route gehörige Gesamtroute derart verzögert eintrifft, daß das Fahrzeug den letzten Wegepunkt der Pre-Route bereits passiert hat und somit in den Fehlfahrtmodus umschaltet. Könnte hingegen diese Pre-Route mit einer vorherigen Route derart verbunden (gemerged) werden, daß zusätzliche Wegepunkte zum identischen Ziel vorliegen, so können diese Wegepunkte genutzt werden.

Auch oben genannten Teilrouten können in Form von Pre-Route und nachfolgender Gesamtroute an das Endgerät gesendet werden, wenn die Datenlänge einen vorgegebenen Wert überschreitet.

Die eindeutige Zuordnung von übermittelten neuen Teilrouten zur Gesamtroute sowie zwischen Pre-Route zur Gesamtroute und von Route-Request-Message zur Route-Message wird durch Registrierungsmittel im Endgerät und in der Zentrale gewährleistet.

Eine zu ungenaue Ortungsinformation beeinflußt die Wegepunkterkennung und die Navigation. Angestrebt ist deshalb eine Ortungsgüte, mit der Wegepunkte mit ausreichender Sicherheit erkannt und Navigationsvorgaben wie Piktogramme und Sprachausgaben zeitlich ausreichend genau ausgegeben werden.

Eine potentiell zu ungenaue Ortungsinformation wird im Endgerät mittels eines Verfahrens zur Ortungsverbesserung korrigiert.

Die inneren Genauigkeiten und Plausibilitätsprüfungen werden bei Nutzung von purem GPS (Global Positioning System) wie folgt verwendet:

Geschwindigkeiten unterhalb eines Schwellwertes können optional als GPS-Drift durch Selective Availability (SA) interpretiert und zu Null gesetzt werden. Nach ermittelter Fahrzeugausrichtung aufgrund der Ortungsspur können überproportionale Querab-Bewegungen (mit Toleranzwinkel zur Definition von querab) optional als GPS-Drift behandelt werden. Durch Bilanzierung der maximalen und mittleren Fahrtstreckenanteile, des GPS-Drifts zur Reduktion der bilanzierten Fahrtstrecke aus Positionsdifferenzen je Positionsermittlungsvorgang wird eine verbesserte Fehlfahrterkennung bei Nutzung der gefahrenen Strecke erzielt.

Zusätzlich können äußere Stützinformationen zur Ortungsverbesserung verwendet werden. Durch eine benutzerinitiierte Ortungsverbesserung an Wegepunkten kann der Benutzer am Endgerät den Zeitpunkt durch Drücken einer Taste angeben, zu welchem das Fahrzeug näher als die potentielle Ortungsungenauigkeit an einem Wegepunkt ist. Das Endgerät koinzidiert die aktuelle Positionsinformation mit der Position des nächstgelegenen Wegepunkts (Schwellwert für maximale Wegepunkt-Entfernung vorgebbar) und bringt diesen Offset an die aktuelle und zukünftige Positionen an. In Fällen, in denen das Ortungsmodul eine Fehlercharakteristik aufweist, die eine Fehlervergrösserung über die Zeit aufweist, kann der zum Zeitpunkt der Koinzidenz berechnete Offset aufgrund einer bekannten oder geschätzten Charakteristik ebenfalls über die Zeit abgebaut werden. Diese benutzer-initiierten Ortungsverbesserungen können bei zeitlich kurzem Abstand auch zeitlich gewichtet und als zeitlich gewichteter Offset genutzt werden. Bei einer Standardeinstellung führt eine vom Benutzer initiierte aktuelle Auslösung einer Ortungsverbesserung unabhängig von vorhergehenden Ortungsverbesserungen zu einem neuen Offset.

Eine durch das Endgerät initiierte Ortungsverbesserung läuft im wesentlichen wie die vom Benutzer initiierte Ortungsverbesserung ab. Der einzige Unterschied liegt im Zeitpunkt, wann der Offset berechnet wird und wie die zur Sollposition korrespondierende Istposition bestimmt wird. Als zweidimensionale Sollpositionen dienen zum einen alle koordinatenmässig im Endgerät bekannten Positionen, die sich aus Ortungsspuren mit ausreichender Genauigkeit herleiten lassen. Ausreichende Genauigkeit bedeutet hierbei besser als die aktuelle Positionsinformation durch die Ortungskomponente unter Einbezug der angebrachten aktuellen Offset-Güte. Als Beispiel sei die zweidimensionale Sollposition des Kreuzungsmittelpunkts, spurtechnisch identifizierbar durch Schnittpunkt der gefahrenen Teilspuren auf der Einfahrtrichtung und der Ausfahrtrichtung genannt. Diese beiden Teilspuren werden ausgleichungstechnisch zu zwei Geraden transformiert, deren Schnittpunkt berechnet wird. Zum anderen können allgemein zur Ortungsverbesserung neben den 2-D Sollpositionen auch eindimensionale oder rein relative positionsunabhängige Informationen wie beispielsweise Kontur- und Begrenzungselemente oder Strassenbreiten (bei bekannter Ausrichtung) zu richtungsbezogenen Korrekturen oder auf die Fahrstreckenlänge bezogene Korrekturen verwendet werden.

Nachfolgend wird die Erfindung anhand der Zeichnung näher beschrieben.

Es zeigen:

Fig. 1 Blockschaltbild eines Off-Board-Navigationssystems

Fig. 2 Schematische Darstellung einer Fahrtroute

Fig. 3 Schematische Darstellung eines Wegepunktes

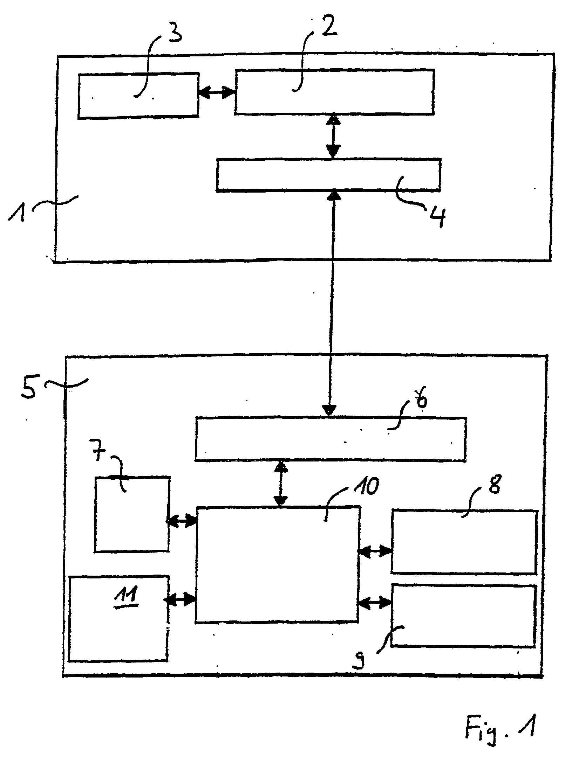

Wie aus der Fig. 1 entnehmbar ist, umfaßt ein Off-Board-Navigationssystem eine Zentrale 1 und ein Endgerät 5, welches in einem nicht näher dargestellten Fahrzeug angeordnet ist. Die Zentrale 1 kommuniziert über Kommunikationseinrichtungen 4, 6 mittels Datennachrichten mit dem Endgerät 5, wobei der bidirektionale Datenaustausch bevorzugt mittels SMS (Short Message Service) durchgeführt wird. Die Zentrale umfaßt einen Rechner 2 zum Verarbeiten von Verkehrsinformationen, zur Registrierung von Routen und Änderungen der Verkehrsinformationen und zum Berechnen von Routen und eine Speichereinrichtung 3 zum Speichern einer digitalen Karte und der berechneten Routen. Das Endgerät 5 umfaßt ebenfalls einen Rechner 10, ein Ortungsmodul 7 zur Positionsermittlung, eine Speichereinrichtung 11 und Eingabemittel 8 zur Zielpositionseingabe sowie Ausgabemittel 9 zur Ausgabe von Sprache, Text und Grafik.

Es ergibt sich folgender Ablauf für das Off-Board-Navigationsverfahren:

Das Endgerät 5 sendet mittels einer Route-Request-Message die ihm bekannte Fahrzeugposition und die Zielpositionsvorgabe an die Zentrale 1. Ausgelöst wird die Route-Request-Message durch eine manuelle Auslösung durch den Benutzer oder durch eine automatische Auslösung im Endgerät 5. Die Zentrale 1 berechnet aus der Fahrzeugposition zum Zeitpunkt der Anfrage und der gewünschten Zielposition unter Einbeziehung der Verkehrsinformationen eine Fahrtroute. Anschließen überprüft der Rechner 2 die Datenmenge der berechneten Fahrtroute. Überschreitet die zu übertragende Datenmenge der Fahrtroute einen bestimmten Wert, beispielsweise wenn mehr als drei SMS - Datenblöcke zur Übertragung der Fahrtroute benötigt werden, so überträgt der Rechner 2 nur anstelle der Fahrtroute eine Pre-Route mit einer Routengrobbeschreibung in Form einer Route-Message an das Endgerät 5. Die Pre-Route umfaßt dabei eine vorgegebene Anzahl der ersten Wegepunkte und die zu den Wegepunkten gehörenden Randpunkte, sowie eine bestimmte Zahl von Aufsatzpunkten, welche benötigt werden, um den Einstieg in die berechnete Route zu erleichtern. Die Routenberechnung wird in der Zentrale 1 durch den Rechner 2 aufgrund von Attributen (schnellste Route, kürzeste Route, vorgegebene Straßentypen bevorzugen usw.) durchgeführt.

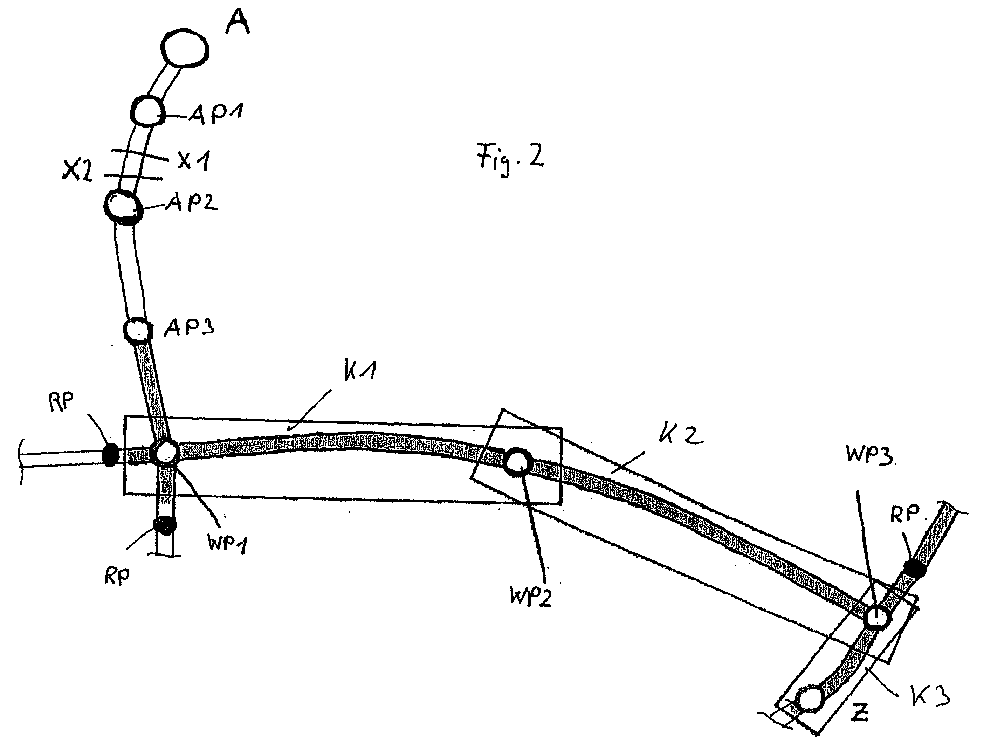

Fig. 2 zeigt schematisch eine von der Zentrale 1 berechnete Fahrtroute. Die übermittelte Fahrtroute umfaßt die Position A zum Zeitpunkt der Anfrage, mehrere Wegepunkte WP1, WP2, WP3, die auf dem Weg zum vorgegebenen Zielpunkt Z passiert werden müssen. Außerdem zeigt Fig. 2 drei Aufsatzpunkte AP1, AP2, AP3, durch die das Aufsetzen auf die Fahrtroute erleichtert wird. In dem dargestellten Beispiel empfängt das Endgerät 5 an der Stelle X1 die Fahrtroute von der Zentrale. An der Stelle X2 erkennt das Endgerät durch die Annäherung an den Aufsatzpunkt AP2, daß es sich auf der Fahrtroute befindet. Die dargestellten Randpunkte RP erleichtern die Erkennung einer Fehlfahrt, denn sie markieren Punkte, die das Fahrzeug auf seinem Weg zur Zielposition Z nicht passieren darf. Zusätzlich zeigt die Fig. 2 drei Korridore K1, K2 und K3, die ebenfalls zur Fehlfahrt erkennung benutzt werden. Sobald das Fahrzeug einen Korridor verläßt, wird eine Fehlfahrt erkannt.

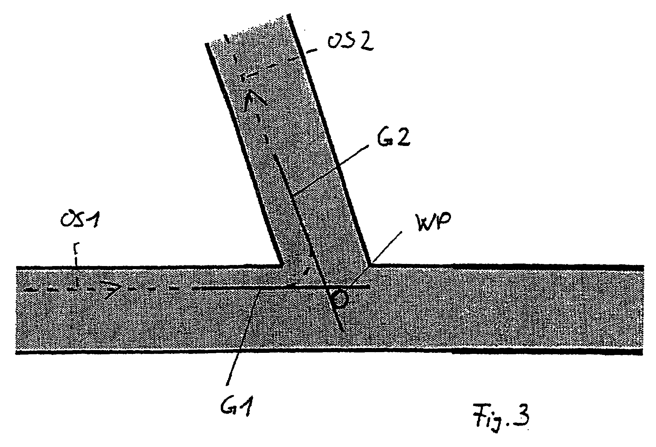

Fig. 3 zeigt einen Wegpunkt WP, an dem das Fahrzeug eine Richtungsänderung vorgenommen hat. Die gestrichelt dargestellte Linie zeigt die Ortungsspuren des Endgerätes und die Einfahrtsund Ausfahrtsrichtung des Wegepunktes WP. Zur Offsetberechnung wird nun die Position des Kreuzungsmittelpunktes durch Berechnung des Schnittpunktes der aus den Teilspuren OS1 und OS2 transformierten Geraden G1 und G2 herangezogen.

**Patentansprüche**

1. Verfahren zur Off-Board-Navigation eines Fahrzeugs,
   bei welchem nach Eingabe einer gewünschten Zielposition ausgehend von der Fahrzeugstartposition von einer Zentrale eine Fahrtroute von der Fahrzeugstartposition zur gewünschten Zielposition berechnet und
   die Fahrtroute als aufeinanderfolgende Wegepunkte, die auf dem Weg zur Zielposition passiert werden müssen, von der Zentrale an das Fahrzeug übertragen und
   dem Fahrer des Fahrzeugs die Fahrtroute unter Berücksichtigung der fortlaufend ermittelten momentanen Ortskoordinaten des Fahrzeugs in Form von Fahrhinweisen ausgegeben wird,
   wobei die Wegepunkte mindestens geographische Ortskoordinaten umfassen,
   **dadurch gekennzeichnet,**
   **dass** die Zentrale vor der Übertragung von Fahrtroutendaten an das Fahrzeug die zu übertragende Datenmenge überprüft und, wenn ein vorgegebener Wert überschritten wird, aus der berechneten Gesamtroute eine verkürzte Teilroute bestimmt, deren Datenmenge den vorgegebenen Wert nicht überschreitet, wobei die übertragene Teilroute mindestens die ersten Wegepunkte der Fahrtroute und eine Routengrobbeschreibung umfasst, und die berechnete Fahrtroute und eine eventuelle Teilroute in der Zentrale endgerätespezifisch registriert werden und vor der Übertragung weiterer Fahrtroutendaten die registrierte Fahrtroute und eine eventuell registrierte Teilroute geprüft werden und abhängig vom Ergebnis dieser Prüfung Fahrtroutendaten an das Fahrzeug übertragen werden.

2. Verfahren zur Off-Board-Navigation eines Fahrzeugs nach Anspruch 1,
   **dadurch gekennzeichnet,**
   **dass** weitere Teilrouten als Fahrtroutendaten an das Fahrzeug übertragen werden.

3. Verfahren zur Off-Board-Navigation eines Fahrzeugs nach Anspruch 1 oder 2,
   **dadurch gekennzeichnet,**
   **dass** für den Fall, dass in der Zentrale zwischen einer neu berechneten und einer registrierten Route ein signifikanter Unterschied detektiert wird, wenigstens die Fahrtroutendaten einer geänderten Teilroute an das Fahrzeug übertragen werden.

4. Verfahren zur Off-Board-Navigation eines Fahrzeugs nach einem der Ansprüche 1 bis 3,
   **dadurch gekennzeichnet,**
   **dass** Fahrtroutendaten von der Zentrale sofort oder zeitverzögert oder abhängig vom von der Zentrale aufgrund von Fahrzeug- und/oder Verkehrsdaten abgeschätzten Positionsfortschritt des Fahrzeugs übertragen werden.

5. Verfahren zur Off-Board-Navigation eines Fahrzeugs nach einem der Ansprüche 1 bis 3,
   **dadurch gekennzeichnet,**
   **dass** Fahrtroutendaten von der Zentrale auf Anforderung des Fahrzeugs übertragen werden, wobei das Fahrzeug die Fahrtroutendaten manuell und/oder zeitgesteuert und/ oder abhängig von einem vom Fahrzeug selbst detektierten Positionsfortschritt und/ oder beim Erkennen einer Fehlfahrt anfordert.

6. Verfahren zur Off-Board-Navigation eines Fahrzeugs nach Anspruch 5,
   **dadurch gekennzeichnet,**
   **dass** die Zentrale zusätzlich räumliche und/oder zeitliche Abstandsgrößen und/oder Annahmen über die Fahrtzeiten zwischen zwei aufeinanderfolgenden Wegepunkten zur Steuerung des vom Fahrzeug selbst detektierten Positionsfortschritts überträgt.

7. Verfahren zur Off-Board-Navigation eines Fahrzeugs nach Anspruch 5 oder 6,
   **dadurch gekennzeichnet,**
   **dass** die Zentrale zusätzliche Randwegepunkte aus einem direkten Randbereich des Sollweges zur Zielposition überträgt, wobei, wenn ein Passieren oder eine Annäherung an diese Randwegepunkte festgestellt wird, eine Fehlfahrt erkannt wird.

8. Verfahren zur Off-Board-Navigation eines Fahrzeugs nach einem der Ansprüche 1 bis 7,
   **dadurch gekennzeichnet,**
   **dass** zusätzlich äußere Stützinformationen in Form von Formelementen oder als absolute Koordinaten von der Zentrale übermittelt werden, aus denen vollautomatisch ein Offset von einer aktuellen Istposition eines Wegepunktes zu einer vorgegebenen Sollposition des Wegepunktes zu diesem Zeitpunkt ermittelt wird, wobei dieser Offset auch über die Zeit bis zum Erhalt der nächsten Stützinformation verringert werden kann.

9. Verfahren zur Off-Board-Navigation eines Fahrzeugs nach Anspruch 8,
   **dadurch gekennzeichnet,**
   **daß** die Stützinformation zur Ermittlung des Offsets durch eine manuelle Eingabe des Benutzers bei Erreichen eines Wegepunktes über Abstandskriterien zugeordnet wird und anschließend der Offset für diesen Wegepunkt ermittelt wird.

10. Verfahren zur Off-Board-Navigation eines Fahrzeugs nach Anspruch 8,
    **dadurch gekennzeichnet,**
    **daß** die Stützinformation vom Endgerät automatisch an Wegepunkten, an denen eine Richtungsänderung durchgeführt wird, berechnet wird, wobei die Teilspuren auf der Einfahrtund Ausfahrtrichtung zu zwei Geraden transformiert werden und deren Schnittpunkt berechnet und als aktuelle Istposition zur Offsetberechnung herangezogen wird.

**Claims**

1. Method of off-board navigation for a motor vehicle, whereby a desired destination point starting from the vehicle's initial position is entered and a journey route from the vehicle's initial position to the desired destination point is computed by a central station and
   the journey route is transmitted from the central station to the vehicle in the form of consecutive route points which have to be passed along the route to the destination point and
   the journey route is output to the driver of the vehicle in the form of routing instructions taking account of the continuously detected instantaneous position co-ordinates of the vehicle,
   the route points incorporating at least geographical position co-ordinates,
   **characterised in that**

prior to transmitting the journey route data to the vehicle, the central station checks the quantity of data to be transmitted to the vehicle and, if a preset value is exceeded, identifies a shorter part-route from the computed overall route for which the requisite quantity of data does not exceed the pre-set value, the transmitted part-route containing at least the first route points of the journey route and a rough description of the route and

the computed journey route and an optional part-route are recorded on a terminal-device-specific basis in the central station and, prior to transmitting more journey route data, the recorded journey route and an optionally recorded part-route are checked and, depending on the result of this check, journey route data is transmitted to the vehicle.

2. Method of off-board navigation for a motor vehicle as claimed in claim 1,
   **characterised in that**
   journey route data is transmitted to the vehicle in the form of other part-routes.

3. Method of off-board navigation for a motor vehicle as claimed in claim 1 or 2,
   **characterised in that**
   if a significant difference is detected in the central station between a newly computed and a recorded route, at least the journey route data of an amended part-route is transmitted to the vehicle.

4. Method of off-board navigation for a motor vehicle as claimed in one of claims 1 to 3,
   **characterised in that**
   the journey route data is transmitted from the central station immediately or after a time delay or depending on the journey progress made by the vehicle as estimated by the central station on the basis of vehicle and/or traffic data.

5. Method of off-board navigation for a motor vehicle as claimed in one of claims 1 to 3,
   **characterised in that**
   journey route data is transmitted from the central station at the request of the vehicle, the vehicle initiating the journey route request manually and/or on a timed basis and/ or depending on journey progress detected by the vehicle itself and/ or if a mistake in the travelled route is detected.

6. Method of off-board navigation for a motor vehicle as claimed in claim 5,
   **characterised in that**
   the central station additionally transmits spatial and/ or time-related distance variables and/ or assumptions about the route points in order to control the journey progress detected by the vehicle itself.

7. Method of off-board navigation for a motor vehicle as claimed in claim 5 or 6,
   **characterised in that**
   the central station additionally transmits peripheral route points from an immediately peripheral area of the desired route to the destination point, and if it is detected that these peripheral route points have been passed or are being approached, the system construes this as being a mistake in the travelled route.

8. Method of off-board navigation for a motor vehicle as claimed in one of claims 1 to 7,
   **characterised in that**
   external back-up information in the form of geometric elements or absolute co-ordinates is additionally transmitted from the central station, from which an offset from a current actual position of a route point relative to a pre-set desired position of the route point at this instant is determined on a fully automated basis, it also being possible for this offset to be reduced over time until such time as the next back-up information is received.

9. Method of off-board navigation for a motor vehicle as claimed in claim 8,
   **characterised in that**
   the back-up information for determining the offset is correlated on the basis of distance criteria by a manual input initiated by he user on reaching a route point and the offset for this route point is then determined.

10. Method of off-board navigation for a motor vehicle as claimed in claim 8,
    **characterised in that**
    the back-up information is automatically computed at route points at which a change of direction takes place, the part-tracks being transformed to two straight lines for the inward journey and outward journey direction and their intersection is computed and applied as a current actual position for the purposes of computing the offset.

**Revendications**

1. Procédé de navigation hors-bord d'un véhicule lors duquel, après saisie de la position d'arrivée souhaitée, à partir de la position de départ du véhicule, un itinéraire, allant de la position de départ du véhicule à la position d'arrivée souhaitée, est calculé par une centrale et l'itinéraire est transmis en tant que points de jalonnement consécutifs, qui doivent être dépassés sur le trajet conduisant à la position d'arrivée, par la centrale au véhicule et l'itinéraire est communiqué au conducteur du véhicule en tenant compte des coordonnées spatiales instantanées du véhicule, calculées en continu, sous la forme de consignes de conduite, les points de jalonnement d'itinéraire comprenant au moins des coordonnées spatiales géographiques, **caractérisé en ce que** la centrale vérifie la quantité de données à transmettre avant la transmission au véhicule des données relatives à l'itinéraire et, lorsqu'une valeur prédéfinie est dépassée, détermine un itinéraire partiel raccourci, à partir de l'itinéraire entier calculé, dont la quantité de données ne dépasse pas la valeur prédéfinie, dans lequel l'itinéraire partiel transmis comprend au moins les premiers points de jalonnement et une description sommaire de l'itinéraire, et l'itinéraire calculé et un éventuel itinéraire partiel sont enregistrés dans la centrale de manière propre à l'appareil terminal et, avant la transmission d'autres données d'itinéraire, l'itinéraire enregistré et un itinéraire partiel éventuellement enregistré sont vérifiés et, en fonction du résultat de cette vérification, les données d'itinéraire sont transmises au véhicule.

2. Procédé de navigation hors-bord d'un véhicule selon la revendication 1, **caractérisé en ce que** d'autres itinéraires partiels sont transmis au véhicule en tant que données d'itinéraire.

3. Procédé de navigation hors-bord d'un véhicule selon la revendication 1 ou 2, **caractérisé en ce qu'**au moins les données d'un itinéraire partiel modifié sont transmises au véhicule au cas où, dans la centrale, une différence notable serait détectée entre un itinéraire nouvellement calculé et un itinéraire enregistré.

4. Procédé de navigation hors-bord d'un véhicule selon les revendications 1 à 3, **caractérisé en ce que** les données d'itinéraire sont transmises par la centrale immédiatement ou avec un retard ou en fonction de la centrale sur la base de la progression de la position du véhicule estimée par les données du véhicule et/ou de circulation.

5. Procédé de navigation hors-bord d'un véhicule selon les revendications 1 à 3, **caractérisé en ce que** les données d'itinéraire sont transmises par la centrale à la demande du véhicule, le véhicule réclamant les données d'itinéraire manuellement et/ou de manière temporisés et/ou en fonction d'une progression de la position détectée par le véhicule même et/ou lors de l'identification d'un parcours erroné.

6. Procédé de navigation hors-bord d'un véhicule selon la revendication 5, **caractérisé en ce que** la centrale transmet en outre les valeurs des intervalles spatiaux et/ou temporels et/ou les hypothèses sur les durées de parcours entre deux points de jalonnement d'itinéraire consécutifs pour la commande de la progression de la position détectée par le véhicule même.

7. Procédé de navigation hors-bord d'un véhicule selon la revendication 5 ou 6, **caractérisé en ce que** la centrale transmet des points de jalonnement d'itinéraire latéraux supplémentaires à partir d'une zone latérale directe du trajet de référence en direction de la position d'arrivée, un parcours erroné étant identifié lorsqu'il est constaté que le véhicule dépasse ou s'approche de ces points de jalonnement d'itinéraire latéraux.

8. Procédé de navigation hors-bord d'un véhicule selon la revendication 1 à 7, **caractérisé en ce que** des informations de soutien externes sont transmises en sus par la centrale sous l'apparence d'éléments de forme ou en tant que coordonnées absolues, à partir desquelles, de manière entièrement automatique, un décalage de la position réelle actuelle d'un point de jalonnement par rapport à la position de référence prédéfinie du point de jalonnement à ce moment-là est déterminé, ce décalage pouvant être également réduit dans le temps jusqu'à réception de l'information de soutien suivante.

9. Procédé de navigation hors-bord d'un véhicule selon la revendication 8, **caractérisé en ce que** l'information de soutien, pour la détermination du décalage par une saisie manuelle de l'utilisateur lorsqu'un point de jalonnement d'itinéraire est atteint, est assignée par le biais de critères d'écart et ensuite le décalage est déterminé pour ce point de jalonnement d'itinéraire.

10. Procédé de navigation hors-bord d'un véhicule selon la revendication 8, **caractérisé en ce que** l'information de soutien est calculée automatiquement par l'appareil terminal aux points au niveau desquels une modification de direction est effectués, les voies partielles dans le sens de l'entrée et de la sortie étant transformées en deux lignes droites et leur intersection étant calculée et utilisée en tant que position réelle actuelle pour le calcul du décalage.

Fig. 1

Fig. 2

Fig. 3